(19) Europäisches Patentamt / European Patent Office / Office européen des brevets

(11) **EP 1 840 527 A1**

(12) **EUROPEAN PATENT APPLICATION**

(43) Date of publication:
**03.10.2007 Bulletin 2007/40**

(51) Int Cl.:
**G01D 5/241** (2006.01)  **G01L 9/00** (2006.01)
**G12B 21/12** (2006.01)

(21) Application number: **06111732.1**

(22) Date of filing: **27.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Infineon Technologies SensoNor AS 3192 Horten (NO)**

(72) Inventor: **Kvisteroy, Terje 3181, Horten (NO)**

(74) Representative: **Haley, Stephen Gill Jennings & Every LLP Broadgate House 7 Eldon Street London EC2M 7LH (GB)**

(54) **Displacement sensor with frequency output**

(57) A displacement sensor comprises an oscillator system comprising an oscillating element. The oscillating element comprises a first conducting surface is arranged to oscillate about a fixed point in use. A second conducting surface is associated with a measurand, and is positioned opposite the first conducting surface at a distance from the first conducting surface.

Voltage supply means is arranged to supply a substantially constant voltage across the first and second conducting surfaces in use and the first and second conducting surfaces are arranged such that, on oscillation of the oscillating member in use, a change in the distance of the second conducting surface from the first conducting surface causes a change in oscillation frequency of the oscillating member.

FIGURE 1

## Description

The present invention relates to a displacement sensor which has a frequency output.

Traditional analogue output sensors suffer from the problem that an analogue-to-digital (AD) converter is needed to covert the analogue output to a useful digital signal. This is complex and has a high power requirement. A variable frequency based output sensor would eliminate the need for an AD converter and also provide better resolution, lower noise levels and greater bandwidth than can be achieved with an analogue sensor.

There are currently known displacement sensors with a frequency output. However these rely on a vibrating member placed directly in contact with the measurand, which suffers from the problem of high damping, which is detrimental to the accuracy which can be achieved by the sensor. Alternatively, a vibrating sensor is coupled to a cantilever of a diaphragm through a mechanical arrangement, which requires complicated, expensive and difficult to manufacture.

The present invention aims to address these problems and provide a displacement sensor with a frequency based output dependent upon the measurand which is simple to construct and has a high accuracy.

According to the present invention there is provided a displacement sensor comprising:

an oscillator system comprising an oscillating element, the oscillating element comprising a first conducting surface and being arranged to oscillate about a fixed point in use;
a second conducting surface associated with a measurand, the second conducting surface being positioned opposite the first conducting surface at a distance from the first conducting surface; and
voltage supply means arranged to supply a substantially constant voltage across the first and second conducting surfaces in use;

wherein the first and second conducting surfaces are arranged such that, on oscillation of the oscillating member in use, a change in the distance of the second conducting surface from the first conducting surface causes a change in the oscillation frequency of the oscillating member.

The present invention provides an output at a frequency indicative of the relative displacement between two electrically isolated members, by making use of the distance dependent electrostatic effect on an oscillating element. This provides a sensor which is simple and has low damping yet which does not require an AD converter.

Examples of the present invention will now be described with reference to the accompanying drawings, in which:

Figure 1 is a diagram showing the basic principles of the present invention;
Figure 2 is a diagram of a displacement sensor according to an example of the present invention; and
Figure 3 is a diagram of a pressure sensor according to an example of the present invention.

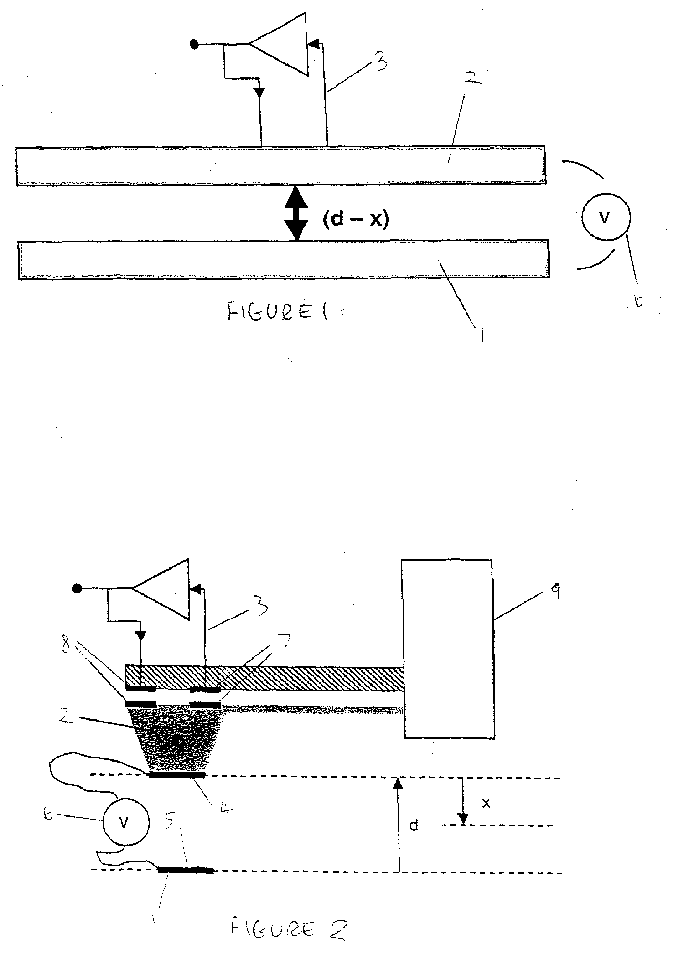

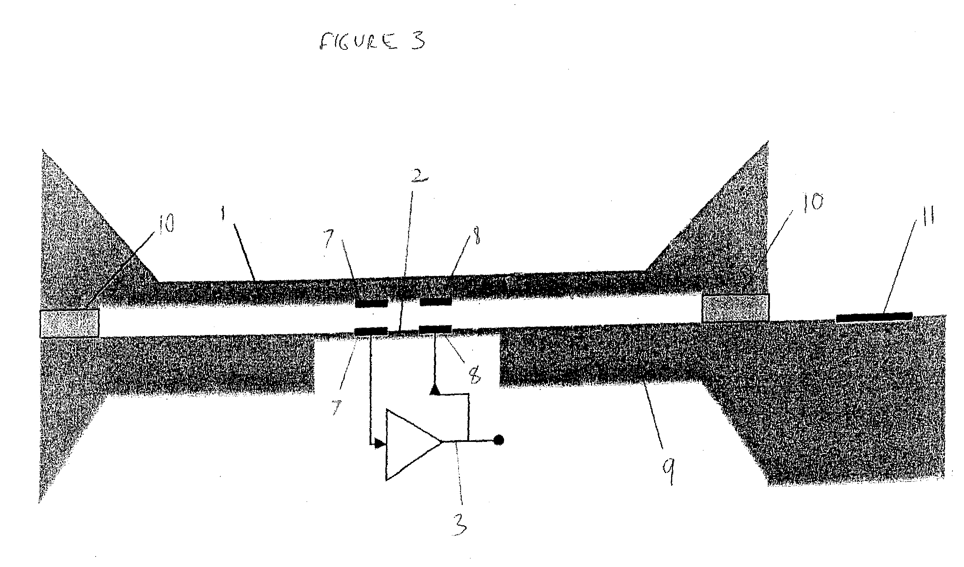

Referring to figure 1, a displacement sensor according to an example of the present invention comprises a moveable member 1 with a position dependent on a measurand. This measurand may directly be displacement, for example displacement of an object or of a fluid. In the case of displacement of an object, the moveable member 1 may be attached to the object or may be the object itself. In the case of displacement of a fluid, the moveable member 1 may be immersed in the fluid. Alternatively the measurand may be a physical property which can cause displacement such as pressure. In this case the moveable member 1 is arranged to be displaced by a change in the measurand. For example to measure a change in pressure, as shown in figure 3, the moveable member 1 may be a pressure diaphragm, to sense changes in displacement caused by changes in pressure.

The sensor further comprises an oscillator system with an oscillating element 2 in a 'fixed' position, that is, which oscillates about a fixed point. An oscillator circuit 3 drives the oscillator 2 in use. The oscillator 2 and moveable member 1 each have a conducting surface 4, 5 (see figure 2) and a voltage supply means 6 is provided such that a voltage V can be supplied across the two components 1, 2.

The oscillator 2 and moveable member 1 are arranged so that the conducting surfaces 4, 5 are opposite each other and spaced apart by a distance d when the oscillator 2 is at rest and there is no voltage across the surfaces 4, 5. When there is a voltage V across the surfaces 4, 5 this distance is reduced by an amount x due to the electrostatic force between the two surfaces 4, 5, so that the surfaces are spaced apart by a distance d -x, as shown in figure 1,

As shown in figure 2, the oscillator system may comprise a micro-cantilever 2 as the oscillator and a self-oscillating loop 3 as the oscillator circuit. The micro-cantilever 2 is operated at resonance, for example by a capacitive pick-up 7 and a capacitor 8 providing an electrostatic force in the self-oscillating loop 3. The voltage used for creating the oscillations should preferably be AC.

The micro-cantilever 2 is attached to a fixed component 9. In figure 2, the micro-cantilever 2 is shown in its rest position with no voltage across the conducting surfaces 4, 5, so that the conducting surface 4 on the micro-cantilever 2 is at distance d from the conducting surface 5 comprised by a moveable member 1. The reduction in distance, x, between the conducting surfaces 4, 5 which would occur on application of a voltage V is also indicated in figure 2.

Figure 3 shows an example of how such a displacement sensor may be implemented, again showing the position of the oscillator 2 when there is no voltage.

In the example shown in figure 3, the measurand is pressure and the sensor comprises a pressure diaphragm 1, with conducting surfaces 5 (not shown)affixed to the pressure diaphragm 1. The oscillator 2 may be, for example, a torsional microelectromechnical system (MEMS) oscillator (detail not shown) with conducting surfaces 4 (not shown) affixed thereto. The pressure diaphragm 1 is bonded to the fixed component 9 at bond locations 10 and connection pads 11 are provided so that a voltage supply means, including V (6) and output signal can be connected.

The invention makes use of the fact that if the potential V between the conducting surfaces 4, 5 is held at a constant value, the resonant frequency of the oscillator 1 is a function of the distance between the conducting surfaces 4, 5, that is a function of (d - x). This is because the potential V causes a distance dependent electrostatic force which acts on the oscillator 1 as a spring force. Therefore a change in the relative displacement of the conducting surfaces changes the spring force acting on the oscillating element 1 and so changes the oscillation frequency of the oscillating element 1.

The signal from the oscillator circuit 3 is proportional to cos (ωt) where t is the time elapsed and ω is the frequency of the oscillator 1. Assuming linearity, ω is defined by the following equation:

$$\omega \cong \omega_0 \sqrt{1 + \frac{1}{2} \frac{\varepsilon A V^2}{k} \frac{1}{x(x+d)^2}}$$

where

$$\omega_0 = 2\pi \sqrt{\frac{k}{m}}$$

for a low damped micro-resonator and
k is the mechanical spring constant of the oscillator 1
m is the mass of the oscillator 1
ε is the permittivity
A is the area of the conducting surfaces 4,5
V is the voltage

In this way a displacement sensor is provided which directly outputs a displacement measurement as a frequency-based signal. A high Q-factor can be obtained as the design freely allows an optimal mechanical construction and the use of an applicable gas or vacuum in the surroundings.

**Claims**

1. A displacement sensor comprising:

an oscillator system comprising an oscillating element, the oscillating element comprising a first conducting surface and being arranged to oscillate about a fixed point in use;
a second conducting surface associated with a measurand, the second conducting surface being positioned opposite the first conducting surface at a distance from the first conducting surface; and
voltage supply means arranged to supply a substantially constant voltage across the first and second conducting surfaces in use;

wherein the first and second conducting surfaces are arranged such that, on oscillation of the oscillating member in use, a change in the distance of the second conducting surface from the first conducting surface causes a change in oscillation frequency of the oscillating member.

2. A displacement sensor according to claim 1, wherein the oscillator system comprises a self-oscillating loop.

3. A displacement sensor according to claim 2, wherein the self-oscillating loop comprises a capacitive pick-up and electrostatic actuation.

4. A displacement sensor according to any preceding claim, wherein the oscillating element is a micro-cantilever or a torsional spring-mass system.

5. A displacement sensor according to any preceding claim, wherein the second conducting surface associated with a measurand comprises the second conducting surface fixed to a pressure diaphragm.

FIGURE 1

FIGURE 2

FIGURE 3

European Patent
Office

**EUROPEAN SEARCH REPORT**

Application Number

EP 06 11 1732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 097 197 A (MATSUYAMA ET AL) 1 August 2000 (2000-08-01) | 1,2,4 | INV. G01D5/241 |
| Y | * column 1, line 16 - column 3, line 40; figure 3 * | 3 | G01L9/00 G12B21/12 |
| | ----- | | |
| Y | US 5 550 516 A (BURNS ET AL) 27 August 1996 (1996-08-27) | 3 | |
| A | * column 2, lines 6-16 * | 1-5 | |
| | ----- | | |

TECHNICAL FIELDS
SEARCHED      (IPC)

G01D
G01L
G12B

The present search report has been drawn up for all claims

| Place of search | Date of completion of the search | Examiner |
|---|---|---|
| Munich | 17 August 2006 | Kallinger, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 06 11 1732

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2006

| Patent document cited in search report | | Publication date | Patent family member(s) | | Publication date |
|---|---|---|---|---|---|
| US 6097197 | A | 01-08-2000 | JP | 10048224 A | 20-02-1998 |
| US 5550516 | A | 27-08-1996 | DE | 69528284 D1 | 24-10-2002 |
| | | | DE | 69528284 T2 | 08-05-2003 |
| | | | EP | 0797758 A1 | 01-10-1997 |
| | | | JP | 10512046 T | 17-11-1998 |
| | | | JP | 3694028 B2 | 14-09-2005 |
| | | | WO | 9618873 A1 | 20-06-1996 |

EPO FORM P0459

For more details about this annex : see Official Journal of the European Patent Office, No. 12/82